# EUROPÄISCHE PATENTANMELDUNG

(11) **EP 0 968 965 A1**
(43) Veröffentlichungstag der Anmeldung: **05.01.2000**
(21) Anmeldenummer: 98111970.4
(22) Anmeldetag: 29.06.1998
(51) Int. Cl.: C02F 3/12, C02F 3/22

(54) **Vorrichtung und diskontinuierliches Verfahren zur biologischen Abwasserreinigung**

(71) Anmelder: ZAPF GMBH + CO., D-95448 Bayreuth (DE)
(72) Erfinder:
(74) Vertreter: Strobel, Wolfgang, Dipl.-Ing.

(57) **Zusammenfassung**

Die vorliegende Erfindung betrifft ein Verfahren zur biologischen Abwasserreinigung und eine Vorrichtung zur Durchführung des Verfahrens. Bei den mit Hilfe von Belebtschlamm durchgeführten Verfahren wird das Abwasser zunächst in ein belüftbares Belebungsbecken und anschließend in ein Sedimentationsbecken eingeleitet, in dem eine Trennung von Belebtschlamm und Klarwasser erfolgt und nach Trennung Belebtschlamm in das Belebungsbecken zurückgeführt und mit Klarwasser abgezogen wird. Im Sedimentationsbecken wird mehrmals am Tag ein Betriebszyklus durchgeführt, der eine Rührphase, eine Vorabsetzphase und eine Abzugsphase aufweist, wobei in der Rührphase der Belebtschlamm wieder mit dem Wasser vermischt wird, in der Vorabsetzphase der Belebtschlamm sedimentiert wird und in der Abzugsphase Klarwasser abgezogen wird. Nach der Vorabsetzphase und vor der Rührphase wird sedimentierter Belebtschlamm in das Belebungsbecken rückgeführt. Bei der erfindungsgemäßen Vorrichtung ist im Sedimentationsbecken eine Rückfördereinrichtung für sedimentierten Belebtschlamm vorgesehen, wobei die Rückfördereinrichtung wenigstens eine Ansaugöffnung im unteren Teil des Sedimentationsbeckens aufweist.

## Beschreibung

Die vorliegende Erfindung betrifft ein Verfahren zur biologischen Reinigung von Abwasser mit Hilfe von Belebtschlamm, nach dem Oberbegriff des Anspruchs 1. Weiterhin betrifft die vorliegende Erfindung eine Vorrichtung zur Durchführung des Verfahrens, nach dem Oberbegriff des Anspruchs 16.

Biologische Reinigungsverfahren von Abwasser mit sedimentiertem Belebtschlamm sind in einer Vielzahl von Varianten bekannt. Allen diesen Verfahren ist im wesentlichen gemeinsam, daß die im Belebtschlamm enthaltenen Mikroorganismen die Abwasserinhaltsstoffe, insbesondere Kohlenwasserstoffe und Stickstoffverbindungen unter Sauerstoffverbrauch aufoxidieren. Es entsteht dabei aus den Kohlenwasserstoffen gasförmiges Kohlendioxid und Wasser und aus den Stickstoffverbindungen zunächst Nitrit und in einer zweiten Stufe Nitrat, was allgemein mit "Nitrifikation" bezeichnet wird. Bei gleichzeitiger Anwesenheit von Nitrat und leicht abbaubaren Kohlenwasserstoffen ohne im Wasser gelösten Sauerstoff (anoxischer Zustand) können viele Kohlenstoff zehrende Bakterien auch den im Nitrat gebundenen Sauerstoff für die Oxidation der Kohlenwasserstoffe nutzen. Die Nitrate werden dabei zu gasförmigem Stickstoff reduziert, was mit "Denitrifikatrion" bezeichnet wird. Dabei ist zu beachten, daß jede Denitrifikation immer eine vorausgehende Nitrifikation voraussetzt.

Neben den Endprodukten des biologischen Abbaus entsteht auch eine zusätzliche Biomasse aufgrund der Vermehrung der Bakterien, der sogenannte "Überschußschlamm".

Damit die Abbauvorgänge möglichst vollständig ablaufen, ist neben einem ausreichenden Sauerstoffangebot insbesondere eine ausreichende Menge der für den jeweiligen Abbauvorgang erforderlichen Mikroorganismen erforderlich. Da die Vermehrungsgeschwindigkeit der den Stickstoff oxidierenden Bakterien wesentlich geringer ist als die den Kohlenstoff zehrenden Bakterien, läuft die Nitrifikation nur dann ab, wenn der Schlamm solange im System verbleibt, daß auch genügend den Stickstoff oxidierende Bakterien entstehen können. Als Hilfsgröße wurde hierfür das "aerobe Schlammalter" eingeführt, das der Verhältniswert zwischen der gesamten im System unter aeroben Bedingungen enthaltenen Menge an Belebtschlamm zur täglich neu entstehenden Schlammenge (Überschußschlammproduktion) ist. Um eine vollständige Nitrifikation erreichen zu können, muß das aerobe Schlammalter mindestens 10 Tage betragen.

Die Überschußschlammproduktion hängt nur von den zugeführten Abwasserinhaltsstoffen ab. Um ein ausreichendes aerobes Schlammalter sicherzustellen, muß die im System vorhandene Schlammenge unter aeroben Bedingungen zehnmal so groß sein wie die tägliche Überschußschlammproduktion. Daraus ergibt sich, daß die Volumina der Klärbehälter um so kleiner sein können, je höher die Konzentration an Belebtschlamm in diesen Behältern ist.

Üblicherweise wird einem kontinuierlich von Abwasser durchflossenen und mit einem sauerstoffhaltigen Gas beaufschlagten Becken, einem sogenannten "Belebungsbecken" ein ebenfalls kontinuierlich durchflossenes Nachklärbecken nachgeschaltet. Dieses dient dazu, den mit dem Abwasser aus dem Belebungsbecken ausgetragenen Belebtschlamm vom Wasser zu trennen und wieder in das Belebungsbecken zurückzuführen. Mit zunehmender Schlammkonzentration nimmt jedoch die Sedimentationsgeschwindigkeit des Belebtschlammes ab. Bei zu hoher Schlammkonzentration im Nachklärbecken ist dadurch die Abtrennung des Schlammanteils aus dem Wasser nicht mehr gewährleistet. Deshalb muß durch regelmäßigen Abzug von Überschußschlamm aus dem System die Schlammkonzentration im Nachklärbecken auf einem Niveau gehalten werden, bei dem die Abtrennung des Schlammes aus dem Wasser noch sichergestellt ist.

Die Konzentration des aus dem Nachklärbecken zurückgeführten Schlammes sowie das Mengenverhältnis von rückgeführtem Schlamm zu zugeführtem Rohabwasser bestimmt die Schlammkonzentration im Belebungsbecken. Sie ist immer niedriger als die Schlammkonzentration im Nachklärbecken.

Aus der WO 97/08104 ist ein Verfahren zur biologischen Reinigung von Abwasser mit Hilfe von Belebtschlamm bekannt, bei dem das Abwasser zunächst in ein belüftbares Belebungsbecken und anschließend in ein Sedimentationsbecken eingeleitet wird, in dem eine Trennung von Belebtschlamm und Klarwasser erfolgt und nach Trennung Belebtschlamm in das Belebungsbecken zurückgeführt und Klarwasser abgezogen wird. Mehrmals am Tag läuft ein Betriebszyklus im Sedimentationsbecken ab, der eine Rührphase, eine Vorabsetzphase und eine Abzugsphase aufweist, wobei in der Rührphase der Belebtschlamm wieder mit dem Wasser vermischt wird, in der Vorabsetzphase der Belebtschlamm sedimentiert wird und in der Abzugsphase Klarwasser gezogen wird.

Gemäß des Standes der Technik nach der WO 97/08104 erfolgt das Umwälzen bei dem dort beschriebenen Verfahren dadurch, daß das Belebungsbecken und das Sedimentations- und Umwälzbecken sowohl im unteren als auch im oberen Bereich je eine Verbindungsleitung aufweisen. In die untere Verbindungsleitung wird durch eine Umwälzpumpe Wasser aus dem Belebungsbecken in das Sedimentationsbecken gedrückt, das über die obere, mit einer Rückschlagklappe versehenen Verbindungsleitung ins Belebungsbecken zurückfließt. Die Rückschlagklappe dient dabei zur Verhinderung eines Rücklaufs aus dem Belebungsbecken in das Sedimentationsbecken über die obere Verbindungsleitung während der Sedimentationsphase, wodurch die Schlammsedimentation gestört würde.

Dabei kann die Anlage im Aufstaubetrieb gefahren werden, d. h. der Wasserspiegel in der Anlage steigt während der abflußlosen Zeit an und fällt während der Abzugsphase wieder auf den Ausgangswert zurück. Alternativ dazu können dem Belebungsbecken zwei im zeitlichen Wechsel betriebene Sedimentations- bzw. Umwälzbecken nachgeschaltet sein, so daß immer in einem Becken die Abzugsphase abläuft, während im anderen Becken die Umwälz- und die Sedimentationsphase ablaufen.

Gemäß dem Verfahren des Standes der Technik wird zu Beginn eines jeden Zyklus in beiden Becken die gleiche Schlammkonzentration eingestellt, die damit höher sein kann als beim klassischen Belebungsverfahren mit kontinuierlich durchflossenem Nachklärbecken.

Nachteilig beim vorstehend beschriebenen Verfahren des Standes der Technik ist zunächst die sehr aufwendigen Bauweise mit zwei Verbindungsleitungen und Rückschlagklappe. Die untere Verbindungsleitung liegt dabei weit unter dem Wasserspiegel, was bei unbeabsichtigten Undichtigkeiten der Rohranschlüsse an die Behälter zu sehr schwerwiegenden Abwasserverlusten führen kann. Ferner ist die Dichtheit der Rückschlagklappen ein Schwachpunkt, da deren Undichtheit dazu führt, daß während der Abzugsphase schlammhaltiges Wasser aus dem Belebungsbecken in den Bereich der Abzugseinrichtung gelangen kann, was zu einer erheblichen Verschlechterung der Ablaufwerte und zu Verlust an Belebtschlamm führen kann. Man hat sich deshalb schon damit geholfen, daß die Rückschlagklappe mit einer mechanischen Zuhalteeinrichtung und einer Dichtung ausgestattet wurde, was wiederum äußerst aufwendig und teuer ist.

Der vorliegenden Erfindung liegt deshalb die Aufgabe zugrunde, das eingangs beschriebene Verfahren zur biologischen Abwasserreinigung derart zu verbessern, daß die obengenannten Nachteile vermieden werden und gleichzeitig gezielt eine höhere Schlammkonzentration im Belebungsbecken gegenüber dem Sedimentationsbecken erreicht wird.

Diese Aufgabe wird durch die Merkmale des Anspruchs 1 gelöst.

Die vorliegende Erfindung zeichnet sich dadurch aus, daß nach der Vorabsetzphase und vor der Rührphase sedimentierter Belebtschlamm in das Belebungsbecken rückgeführt wird. Aufgrund dieser Maßnahme hat sich überraschenderweise gezeigt, daß sich damit gezielt Belebtschlammkonzentrationen im Belebungsbecken einstellen lassen, die 30 bis 100 % höher sind als die Konzentration im Sedimentationsbecken. Zusätzlich ist dafür nur eine im Verhältnis zur gesamten Zykluszeit kurze Schlammrückführungszeit erforderlich. Das Sedimentationsbecken kann dabei zeitanteilig mit für die Klärung des Abwassers herangezogen werden, wenn auch diesem Becken zeitweilig sauerstoffhaltiges Gas zugeführt wird, sofern eine ausreichend lange Sedimentationszeit ohne Gaszuführung vor dem Abzug des geklärten Wassers eingehalten wird, damit sich der Belebtschlamm absetzen kann.

Vorteilhafterweise wird eine hohe Schlammkonzentration insbesondere dann erreicht, wenn die Rückförderung des sedimentierten Belebtschlammes erst während oder sogar nach Beendigung der Abzugsphase für geklärtes Wasser erfolgt.

Durch die Rückförderung des sedimentierten Belebtschlammes wird im Belebungsbecken Wasser verdrängt, das wieder ins Sedimentationsbecken über eine obere Überlaufleitung zurückgeführt wird. Dieses Wasser enthält ebenfalls Belebtschlamm, allerdings mit einer geringeren Konzentration als der rückgeförderte sedimentierte Schlamm. Um diesen Schlammrückfluß vom Belebungsbecken ins Sedimentationsbekken zu minimieren, ist es gemäß der vorliegenden Erfindung zweckmäßig, vor Beginn der Rückförderung des Belebtschlammes die Belüftung im Belebungsbecken zu unterbrechen oder zu drosseln. Dadurch sinkt der durch die Belüftung aufgewirbelte Belebtschlamm bis unter das Niveau der Überlaufleitung ab und die Schlammkonzentration des verdrängten Wassers wird reduziert.

Weiterhin ist vorteilhaft, daß bereits ein geringer Anteil der Zykluszeit für die Schlammrückförderung genügt, um die gewünschte hohe Schlammkonzentration im Belebungsbecken zu erreichen. Ein kurzer Zeitanteil für die Rückförderung ermöglicht einen längeren Zeitanteil für die Belüftung des Sedimentationsbeckens.

Gemäß einem weiteren Vorteil der vorliegenden Erfindung wird das im Belebungsbecken bei der Rückförderung von Belebtschlamm verdrängte Wasser im Sedimentationsbecken unter der Höhe des Schlammspiegels eingeleitet, wodurch sichergestellt wird, daß der rückgeführte Belebtschlamm in die Schlammschicht des Sedimentationsbeckens eingeleitet wird und nicht in die während der Sedimentationsphase gebildete Klarwasserschicht. Dies ist von besonderer Bedeutung, wenn die Rückförderung vor oder während des Abzugs des geklärten Wassers erfolgt.

Gemäß alternativen Ausführungen bestehen Möglichkeiten für die zeitlich parallele Sauerstoffversorgung von Belebungsbecken und Sedimentationsbecken.

Weiterhin können beim erfindungsgemäßen Verfahren vorteilhafterweise mindestens zwei Paare von Belebungs- und Sedimentationsbecken parallel geschaltet bzw. zeitversetzt betrieben werden, so daß die Zeiten ohne Abfluß verkürzt werden können und so die aufzustauende Abwassermenge verringert werden kann.

Die Abzugszeit für das geklärte Wasser ist ein Maß für die im vorangegangenen Zyklus zugeflossene Abwassermenge und damit auch indirekt für den Sauerstoffbedarf zur biologischen Reinigung. Ein Teil der biologisch abbaubaren Stoffe wird langsamer abgebaut und beeinflußt so auch den Sauerstoffbedarf im darauffolgenden Zyklus. Durch die Messung der Abzugszeit kann damit die Sauerstoffzufuhr im nachfolgenden Zyklus über einen Algorithmus beeinflußt werden und damit ohne aufwendige Sauerstoffregelung Energie für die Sauerstoffversorgung eingespart werden.

In zulaufschwachen Zeiten, z. B. während des Betriebsurlaubes bei einer Industriekläranlage kann es zu Nährstoffmangel für die Mikroorganismen in der Kläranlage kommen. Es ist dann besonders vorteilhaft, Schlamm aus einer eventuell vorhandenen anaeroben Vorbehandlung des Abwassers zuzuspeisen und damit ein Grundnahrungsangebot aufrecht zu erhalten. Diese Zuspeisung kann entweder durch Beeinflussung von außen zugeschaltet werden oder über die vorgesehene Erfassung der Abzugszeit automatisch beeinflußt werden.

Die vorliegende Erfindung hat auch eine Vorrichtung zur Durchführung des Verfahrens, gemäß Anspruch 16, zum Gegenstand.

Die erfindungsgemäße Vorrichtung zeichnet sich dadurch aus, daß im Sedimentationsbecken eine Rückfördereinrichtung für sedimentierten Belebtschlamm vorgesehen ist, wobei die Rückfördereinrichtung wenigstens eine Ansaugöffnung im unteren Teil, vorzugsweise sogar im Bodenbereich des Sedimentationsbeckens aufweist. Damit wird vorteilhafterweise der sedimentierte Belebtschlamm an der Stelle mit der höchsten Konzentration angesaugt.

Vorteilhafterweise sind mehrere Ansaugöffnungen im horizontalen Abstand voneinander angeordnet, so daß der über den Boden des zweiten Behälters verteilte eingedickte Schlamm weiterhin besser erfaßt werden kann. Durch entsprechende Wahl der Anzahl und Lage der Ansaugöffnungen kann praktisch der gesamte Bodenbereich abgesaugt werden.

Dadurch, daß die Ausmündung der Rückfördereinrichtung im Belebungsbecken mit horizontalem Abstand zum Überlauf angeordnet ist, wird eine Kurzschlußströmung zwischen dem in das Belebungsbecken geförderten sedimentierten Belebtschlamm und dem aus dem Belebungsbecken verdrängten Wasser vermieden. Besonders vorteilhaft erfolgt dies dadurch, daß die Ausmündung der Rückfördereinrichtung in der Nähe der dem Überlauf gegenüberliegenden Wand des Belebungsbeckens angeordnet ist.

Wenn die Ausmündung der Rückfördereinrichtung unter dem niedrigsten Wasserspiegel liegt, wird der rückgeförderte Schlamm in tiefere Schichten des Wassers im Belebungsbecken transportiert und eine Kurzschlußströmung zum Sedimentationsbecken auch dadurch vermieden. Dies gilt insbesondere, wenn der vertikale Abstand der Ausmündung der Rückfördereinrichtung zum niedrigsten Wasserstand 10 bis 90% bzw. vorzugsweise etwa 20 bis 40% der Höhe des niedrigsten Wasserstandes beträgt.

Wenn die Rohrleitung der Rückfördereinrichtung auf ihrer gesamten Länge unter dem tiefsten Wasserstand verläuft, wird die Förderhöhe der Rückfördereinrichtung praktisch auf die Rohrreibungsverluste reduziert.

Vorteilhafterweise ergibt sich dadurch, daß zumindest Teilbereiche der Rohrleitung der Rückfördereinrichtung innerhalb der Überlaufleitung zwischen dem Belebungsbecken und dem Sedimentationsbecken angeordnet sind, daß auf zusätzliche Wanddurchbrüche der Behälter für die Rückfördereinrichtung verzichtet werden kann.

Um einen ausreichend großen Rücklaufquerschnitt für das aus dem Belebungsbecken verdrängte Wasser zur Verfügung zu stellen, ist es zweckmäßig, die Zulauföffnung der Überlaufleitung im ersten Behälter etwa auf Höhe des niedrigsten Wasserstandes zu legen. Es ist dabei zweckmäßig, daß bei niedrigstem Wasserstand etwa noch die halbe Querschnittsfläche der Überlaufleitung wassergefüllt ist.

Weiterhin ist vorteilhaft, daß die Überlaufleitung zwischen den Behältern leicht montiert werden kann und im Bereich zwischen den Behältern als Freispiegelleitung verläuft, so daß die Rohrabdichtungen am Becken nur mit geringem hydrostatischem Druck belastet werden. Allerdings wäre es unzweckmäßig, die Überlaufleitung im Sedimentationsbecken auch horizontal ausmünden zu lassen, da in diesem Fall bei Belüftung des Belebungsbeckens Belebtschlamm aus diesem Becken in die bereits gebildete Klarwasserschicht im Sedimentationsbecken eingespült werden könnte. Aus diesem Grund weist die Überlaufleitung im Sedimentationsbecken ein Knie und einen vertikalen Abschnitt auf.

Dabei ist es besonders vorteilhaft, wenn die Mündung der Überlaufleitung im Sedimentationsbecken unterhalb des Schlammspiegels des sedimentierten Belebtschlamms liegt. Aus dem Belebungsbecken über die Überlaufleitung transportierter Belebtschlamm wird dann durch die bereits gebildete Belebtschlammschicht ausgefiltert und gelangt nicht in die Klarwasserschicht.

Wenn die Mündung der Zuleitung in das Belebungsbecken im Bodenbereich des Sedimentationsbeckens angeordnet ist, wird dadurch bewirkt, daß das zulaufende Abwasser das gesamte Volumen des Sedimentationsbeckens passieren muß, ehe es zu der Überlaufleitung in den zweiten Behälter gelangt. Damit steht ausreichend Zeit zum biologischen Abbau der Schmutzstoffe im Abwasser zur Verfügung.

Eine besonders kostensparende und betriebssichere Möglichkeit ist die Ausführung der Fördereinrichtungen für die Rückförderung, das Klarwasser und den Überschußschlamm in Form eines Drucklufthebers. Es kann damit die für die Sauerstoffversorgung des Abwassers in den beiden Becken ohnehin vorhandene Druckluft für die Fördereinrichtungen mit verwendet werden.

Für einen Druckluftheber ist es erforderlich, daß ein ausreichend langer im Wasser verlaufender aufsteigender Rohrabschnitt vorhanden ist, der belüftet wird. Dadurch, daß die Abzugseinrichtung für geklärtes Wasser einen oberen und einen unteren U-förmigen Krümmer aufweist, wird einerseits dieses aufsteigende Rohrteil zur Verfügung gestellt und andererseits wird durch den oberen U-förmigen Krümmer bewirkt, daß die Ansaugleitung nach oben gerichtet ist. Dadurch wird einerseits verhindert, daß auf der Wasseroberfläche befindlicher Schwimmschlamm angesaugt wird, und andererseits kann sich auch bei Sedimentieren des Belebtschlammes im Sedimentationsbecken kein Schlamm in der Ansaugleitung absetzen.

Wird darüber hinaus zusätzlich im Bereich des oberen U-förmigen Krümmers der Abzugseinrichtung für geklärtes Wasser eine Luftzuführung angeordnet, die mit der Zuleitung zur Zuführeinrichtung für sauerstoffhaltigem Gas im Sedimentationsbecken unter Zwischenschaltung einer Drosseleinrichtung verbunden ist, so wird während des Einblasens von sauerstoffhaltigen Gas in das Sedimentationsbecken eine geringe Menge dieses Gases in den oberen U-förmigen Krümmer eingeblasen. Damit ist auch sichergestellt, da0 auch beim Einblasen des sauerstoffhaltigen Gases keine Schlammpartikel in die Ansaugleitung der Abzugseinrichtung eingespült werden können.

Weiterhin können mit Vorteil die Abzugseinrichtung für geklärtes Wasser und für Überschußschlamm über ein gemeinsames Steuerventil mit Fördergas versorgt werden, und Drosseleinrichtungen nach dem Steuerventil vorgesehen sein, mit denen die Fördermenge der beiden Abzugseinrichtungen unabhängig voneinander geregelt werden kann. Dies stellt eine besonders kostengünstige Ausführung der Steuerung der Abzugseinrichtung für geklärtes Wasser und Überschußschlamm dar. Durch Wahl geeigneter Blendendurchmesser kann dabei die gewünschte Fördermenge der Abzugseinrichtung vorgegeben werden.

Da der Abwasserzufluß zu einer Kläranlage zeitlich schwankt, kann die Abzugseinrichtung nicht mit einem festen Zeitrhythmus betrieben werden. Gemäß der vorliegenden Erfindung ist deshalb im Sedimentationsbecken ein Schwimmer für die Regelung des niedrigsten Wasserstandes vorgesehen, der bei Erreichen des niedrigsten Wasserstandes das Steuerventil schließt.

Weitere Einzelheiten, Merkmale und Vorteile der vorliegenden Erfindung ergeben sich aus der nachfolgenden Beschreibung unter Bezugnahme auf die Zeichnung. Darin zeigt:
- Figur 1: ein Blockschaltbild des erfindungsgemäßen Verfahrens;
- Figur 2: eine schematische Darstellung der einzelnen Verfahrensschritte während eines Zyklus;
- Figur 3: eine schematische Schnittzeichnung durch die erfindungsgemäße Vorrichtung.

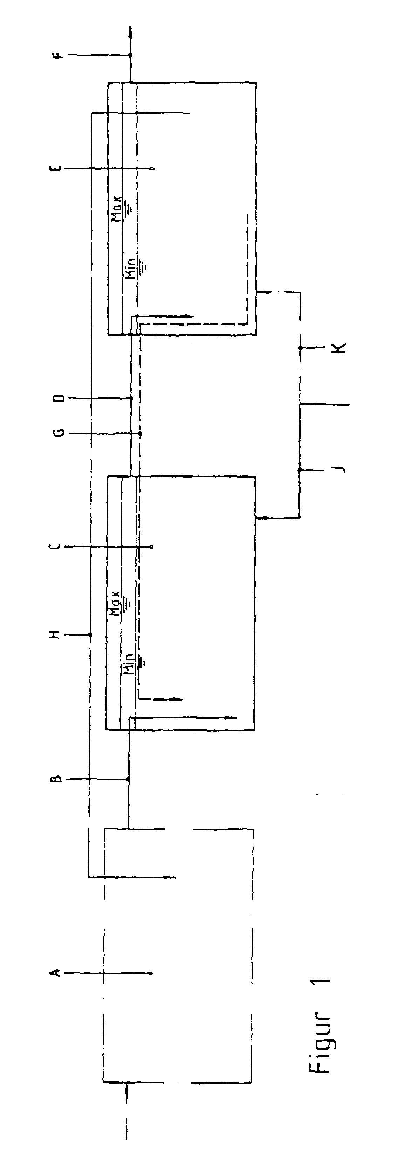

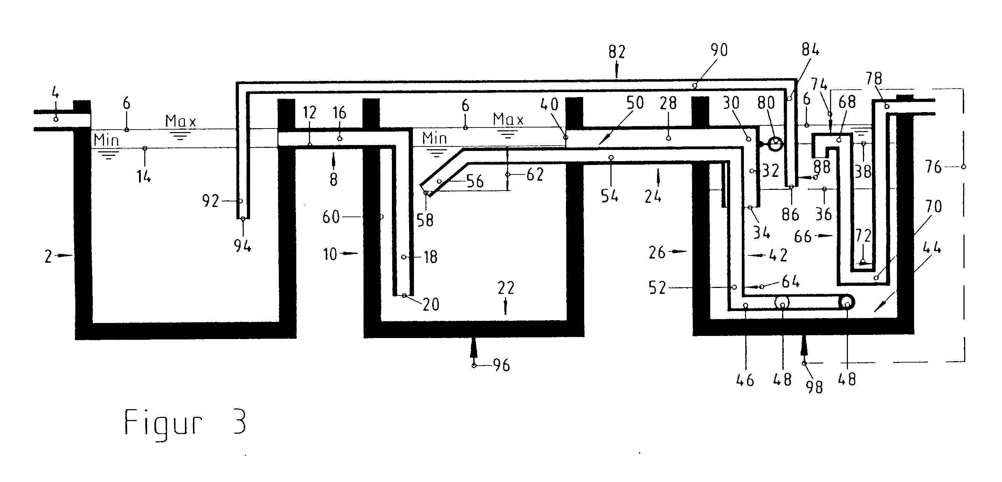

Entsprechend der Darstellung in Figur 1 fließt das Abwasser - gegebenenfalls nach Vorbehandlung in einem anaeroben Bereich A (Blockdarstellung ganz links in Figur 1) über einen Abwasserzulauf B einem ersten Bereich C, wie einem Belebungsbecken (Bezugsziffer 10 in Fig. 3) zu, der durch Zufuhr eines sauerstoffhaltigen Gases J, im allgemeinen Druckluft, in aeroben Zustand versetzt wird. Dabei werden die im Abwasser enthaltenen Kohlenwasserstoffverbindungen und Stickstoffverbindungen weitgehend aufoxidiert. Bei ausreichend großer Auslegung der Anlage können auch durch längere Unterbrechungen der Gaszufuhr anoxische Zustände erreicht werden, bei denen weiterhin leicht abbaubare Kohlenwasserstoffverbindungen oxidiert und gleichzeitig die durch die Oxidation der Stickstoffverbindungen entstandenen Nitrate zu gasförmigem Stickstoff reduziert werden.

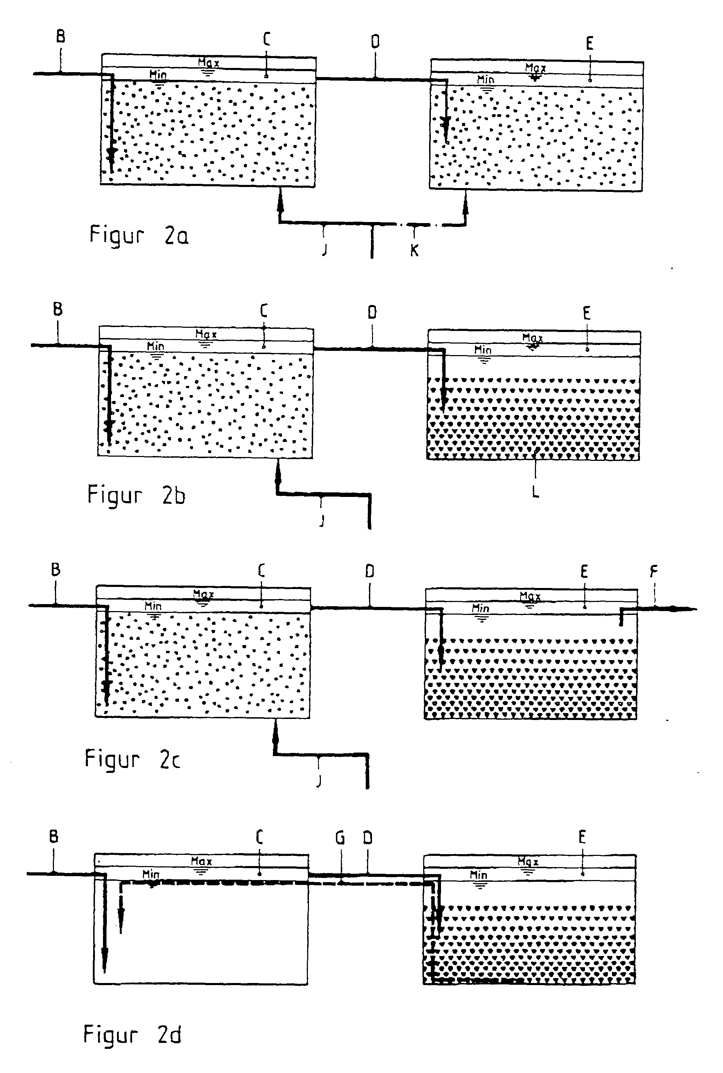

Über eine Überlaufverbindung D gelangt das Abwasser in einen zweiten Bereich E, wie beispielsweise einem Sedimentationsbecken (Bezugsziffer 26 in Fig. 3), in dem in einem sich wiederholenden Zyklus die bei Figur 2 a bis d näher beschriebenen Verfahrensschritte zeitlich nacheinander ablaufen.

Die Figuren 2a bis d zeigen schematische Darstellungen der Verfahrenschritte im zweiten Bereich E; zum besseren Verständnis ist auch der erste Bereich C mit dargestellt. Allen vier Darstellungen ist gemeinsam, daß dem ersten Bereich C ständig Abwasser zugeführt wird B und auch von dort in den zweiten Bereich überläuft D. Ein Ablauf F von geklärtem Wasser erfolgt hier nur während des dritten Verfahrensschrittes (Figur 2c).

Während der anderen Verfahrensschritte staut sich das Abwasser in den beiden Bereichen oder - bei Vorhandensein einer anaeroben Vorbehandlung - auch in diesem Bereich auf. Während der ersten beiden und dem letzten Verfahrensschritt (Figuren 2a, 2b und 2d) fließt dem zweiten Bereich nur die Differenz des Abwasserzulaufs abzüglich der in den vorgeschalteten Bereichen aufgestauten Menge zu. Im ersten Bereich wird mit Ausnahme des letzten Verfahrensschrittes ständig sauerstoffhaltiges Gas, im allgemeinen Druckluft, zugeführt J, symbolisiert durch die aufsteigenden Blasen. Während dieser Phasen steigt der Gehalt an gelöstem Sauerstoff im Wasser, so daß für die Phase ohne Sauerstoffzufuhr ein ausreichender Puffer vorhanden ist.

Figur 2a zeigt als ersten Verfahrensschritt im zweiten Bereich E die Zuführung K eines sauerstoffhaltigen Gases in diesen Bereich. Dieser Verfahrensschritt ist optional und kann auch entfallen. Wenn sauerstoffhaltiges Gas in den zweiten Bereich zugeführt wird, wird dieser Bereich zeitanteilig mit für die Oxidierung von noch im Abwasser enthaltenen Kohlenwasserstoff- und Stickstoffverbindungen mit genutzt. Die Zuführung K des sauerstoffhaltigen Gases kann entweder parallel zu der Zuführung J in den ersten Bereich erfolgen oder alternierend mit der Zufuhr J in den ersten Bereich. Im letzteren Fall steigt während der Zufuhr K in den zweiten Bereich dort der Sauerstoffgehalt des Wassers an; der gelöste Sauerstoff wird dann während der Gaszufuhr J in den ersten Bereich wieder verbraucht. Entsprechendes gilt für den ersten Bereich.

Figur 2b zeigt schematisch die Sedimentation des Belebtschlammes im zweiten Bereich E, symbolisiert durch die als Dreiecke dargestellten Belebtschlammflocken L. Es ist erkennbar, daß sich im oberen Teil des zweiten Bereiches E eine Klarwassserschicht bildet, während sich im unteren Teil der Belebtschlamm verdichtet.

Nachdem sich eine ausreichend hohe Klarwasserschicht gebildet hat, wird im in Figur 2c dargestellten dritten Verfahrensschritt geklärtes Wasser aus dem zweiten Bereich gemäß F abgezogen. Dabei sinkt der Wasserspiegel in allen Bereichen. Dem zweiten Bereich E fließt in dieser Phase neben dem Abwasserzulauf D auch die Wassermenge zu, die sich aus der Spiegelabsenkung in den vorgeschalteten Bereichen ergibt. Um Schlammaufwirbelungen im zweiten Bereich E zu vermeiden, wird der Überlauf im zweiten Bereich E unter der Höhe des Schlammspiegels mit Fließrichtung nach unten eingeleitet, wie aus der Darstellung erkennbar. Die bereits gebildete Belebtschlammschicht wirkt dabei für das aufsteigende Wasser wie ein Filter, der die Mitführung von Schlammflocken in Richtung zum Abzug verhindert. Es wird ausdrücklich darauf hingewiesen, daß der hier als dritter Verfahrensschritt dargestellte Abzug von geklärtem Wasser auch gleichzeitig oder nach der in Figur 2b dargestellten Rückförderung von sedimentiertem Belebtschlamm ablaufen kann.

Die relativ große Wassermenge, die während des Abzugs von geklärtem Wasser dem zweiten Bereich E zufließt, führt aus dem ersten Bereich C Belebtschlamm mit, der im zweiten Bereich mit sedimentiert.

In nicht dargestellter Weise kann gleichzeitig mit dem Abzug des geklärten Wassers auch Überschußschlamm aus dem zweiten Bereich abgezogen werden (siehe auch Figur 1). Zweckmäßigerweise wird dabei der Überschußschlamm in Höhe der oberen Begrenzung der Schlammschicht angesaugt; damit wird sichergestellt, daß nur bei Vorhandensein einer ausreichenden Menge von Belebtschlamm Überschußschlamm abgezogen wird; in anderen Fall wird nur Wasser abgeführt.

In Figur 2d ist als letzter Verfahrensschritt die Rückförderung G des sedimentierten Belebtschlammes in den Bereich C dargestellt. Dieser Verfahrensschritt kann auch alternativ zeitgleich mit dem Abzug des geklärten Wassers oder sogar vor diesem Verfahrensschritt erfolgen. Zweckmäßig ist jedoch ein möglichst später Zeitpunkt, weil die Konzentration des Belebtschlammes im unteren Teil des zweiten Bereiches mit der Zeit zunimmt und auch der während des Abzugs von geklärtem Wasser aus dem ersten in den zweiten Bereich verlagerte Belebtschlamm mit erfaßt wird.

Im ersten Bereich ist während dieses Verfahrensschrittes nach Figur 2d die Zufuhr von sauerstoffhaltigem Gas unterbrochen. Alternativ dazu ist es aber auch denkbar, daß während der Rückförderung des Belebtschlammes das Gas stark gedrosselt zugeführt wird, so daß Schlammaufwirbelungen im ersten Bereich C weitgehend verhindert werden. Es muß jedenfalls sichergestellt werden, daß mit dem durch die Rückförderung im ersten Bereich C verdrängten Wasser möglichst wenig Schlamm aus dem ersten in den zweiten Bereich zurückverlagert wird. Dies wird noch besser erreicht, wenn die Gaszufuhr bereits kurze Zeit vor dem Beginn der Rückförderung des Belebtschlammes gedrosselt oder unterbrochen wird, so daß der Belebtschlamm im ersten Bereich C schon zu sedimentieren beginnt.

Die Zeit für die Rückförderung von Belebtschlamm soll einerseits möglichst kurz sein, weil in dieser Zeit weniger für den biologischen Abbau benötigter Sauerstoff eingetragen werden kann und die Versorgungseinrichtungen entsprechend größer dimensioniert werden müssen. Andererseits hat es sich als zweckmäßig erwiesen, daß die rückgeförderte Belebtschlammenge etwa doppelt so groß wie die in einem Zyklus zugeführte Abwassermenge ist.

Die In Figur 2d dargestellte Absaugung G des sedimentierten Belebtschlammes am Boden des zweiten Bereiches E und Eintragung in den oberen Teil des ersten Bereiches C ist zwar zweckmäßig, aber nicht zwingend. Beisspielweise kann der Belebtschlamm auch im zweiten Bereich weiter abgesaugt und auf gleicher Höhe in den ersten Bereich eingetragen werden.

Die in Figur 3 dargestellte Vorrichtung stellt beispielhaft dar, wie das Verfahren mit einer konkreten Anlage ausgeführt werden kann. Es wird ausdrücklich darauf hingewiesen, daß auch andere Ausgführungsformen der Vorrichtung denkbar sind.

Die Vorichtung in diesem bevorzugten Ausführungsbeispiel weist ein Vorklärbecken 2 für die anaerobe Vorbehandlung des Abwassers auf, in den eine Zuleitung 4 oberhalb des höchsten Wasserstandes 6 mündet. Das Vorklärbecken 2 ist optional und kann auch entfallen; in diesem Fall wird ein nicht dargestellter Schlammspeicher für den Überschußschlamm vorgesehen.

Eine Verbindungsleitung 8 leitet das vorbehandelte Abwasser in ein Belebungsbecken 10. Die Sohle 12 der Verbindungsleitung 8 begrenzt den tiefsten Wasserstand 14 im Vorklärbekken 2. Die Verbindungsleitung 8 weist einen horizontalen Teil 16 und einen vertikalen Teil 18 auf. Ihre Mündung 20 liegt im Bodenbereich 22 des Belebungsbeckens 10.

Aus dem Belebungsbecken 10 führt eine Überlaufleitung 24 in ein Sedimentations- und Umwälzbecken 26. Die Überlaufleitung 24 weist einen horizontalen Abschnitt 28, ein Knie 30 und einen vertikalen Abschnitt 32 auf. Ihre Mündung 34 liegt unterhalb des tiefsten Schlammspiegels 36.

In allen drei Becken 2, 10 und 26 ist nach dem Prinzip kommunizierender Röhren der höchste Wasserstand 6 gleich. In den Becken 10 und 26 ist auch der tiefste Wasserstand 38 gleich. Dagegen kann im Vorklärbecken 2 der tiefste Wasserstand 14 höher liegen als der tiefste Wasserstand 38 in den beiden anderen Becken. Eine Zulauföffnung 40 der Überlaufleitung 24 liegt im Bereich des tiefsten Wasserstandes 38 und vorzugsweise so, daß bei tiefstem Wasserstand 38 die Überlaufleitung 24 noch etwa zur Hälfte gefüllt ist.

Zwischen dem Belebungsbecken 10 und dem Sedimentations- und Umwälzbecken 26 ist außerdem noch eine Rückfördereinrichtung 42 für Belebtschlamm angeordnet. Diese weist im Bodenbereich 44 des Sedimentations- und Umwälzbeckens 26 einen horizontalen Strang 46 mit mehreren Ansaugöffnungen 48 auf. Die Ansaugöffnungen 48 können auch Bestandteil von quer zum horizontalen Strang 46 verlaufenden Rohrleitungen sein. Die Rohrleitung 50 der Rückfördereinrichtung 42 weist ferner einen vertikalen Strang 52, einen zweiten horizontalen Strang 54 sowie einen geneigten Strang 56 auf. Die Mündung 58 der Rückfördereinrichtung 42 liegt benachbart zur Wand 60 des Belebungsbeckens 10, die der Zulauföffnung 40 der Überlaufleitung 24 gegenüberliegt und mit einem vertikalen Abstand 62 in der Größenordnung von 25 % der Höhe des tiefsten Wasserstandes 38 unter dem tiefsten Wasserstand 38. Die Rohrleitung 50 der Rückfördereinrichtung 42 verläuft in Teilbereichen innerhalb der Überlaufleitung 24. Die Rückförderung wird durch eine Luftzuführung 64 im unteren Teil des vertikalen Stranges 52 bewirkt.

Im Sedimentations- und Umwälzbecken 26 ist ferner eine Abzugseinrichtung 66 für geklärtes Wasser angeordnet, die einen oberen U-förmigen Krümmer 68 und einen unteren U-förmigen Krümmer 70 aufweist sowie eine Luftzuführung 72 oberhalb des unteren Krümmers 70. Eine Sperrgaszuführung 74 ist am oberen Krümmer 68 angeordnet und über eine Verbindungsleitung 76 mit der Zuführung 98 des sauerstoffhaltigen Gases in das Sedimentations- und Umwälzbecken verbunden, so daß bei Betrieb der Zuführung 98 Sperrgas in den oberen Krümmer 68 geführt wird und das Eindringen von Belebtschlammflocken in die Abzugseinrichtung 66 verhindert.

Die horizontale Ablaufleitung 78 der Abzugseinrichtung 66 liegt etwas über dem höchsten Wasserstand 6 und dient gleichzeitig als Notüberlauf bei Ausfall der Luftzuführung 72. Ein Schwimmer 80 schaltet die Luftzuführung 72 bei Erreichen des tiefsten Wasserstandes 38 ab.

Zusätzlich ist zwischen dem Sedimentations- und Umwälzbekken 26 und dem Vorklärbecken 2 eine ÜberschußschlammAbzugseinrichtung 82 angeordnet. Diese weist einen vertikalen Rohrstrang 84 mit einer Ansaugöffnung 86 etwa in Höhe des niedrigsten Schlammspiegels 36 im Sedimentations- und Umwälzbecken 26 auf. Unmittelbar oberhalb der Ansaugöffnung 86 wird die Förderluft über eine Luftzuführung 88 zugeführt. An den vertikalen Rohrstrang 84 schließt sich ein annähernd horizontaler Rohrstrang 90 an von dem ein abwärts gerichteter Rohrstrang 92 nach unten in das Vorklärbecken 2 führt, das hier gleichzeitig auch als Speicher für Überschußschlamm dient. Die Mündung 94 des abwärts gerichteten Rohrstrangs 92 liegt etwa auf halber Höhe des Vorklärbekkens 2.

Sowohl das Belebungsbecken 10 als auch das Sedimentations- und Umwälzbecken 26 sind im Bodenbereich 22 bzw. 44 mit einer nicht im Detail dargestellten handelsüblichen Belüftungseinrichtung 96 bzw. 98 ausgestattet.

Sämtliche Luftzuführungen werden über einen nicht dargestellten Verdichter mit Luft versorgt, wobei deren Ansteuerung mit ebenfalls nicht dargestellten Magnetventilen erfolgt.

Der Ablauf des Verfahrens in dieser Vorrichtung entspricht dem unter Figur 2a bis d beschriebenen Verfahren.

Mit der vorliegenden Erfindung wird somit ein einfaches und wirksames Verfahren zur biologischen Abwasserreinigung geschaffen. Des weiteren kann das Verfahren auf besonders wirksame Weise mit Hilfe der erfindungsgemäßen Vorrichtung durchgeführt werden.

### Bezugszeichenliste

- 2: Vorklärbecken
- 4: Zuleitung
- 6: höchster Wasserstand
- 8: Verbindungsleitung
- 10: Belebungsbecken
- 12: Sohle der Verbindungsleitung
- 14: tiefster Wasserstand
- 16: horizontaler Teil
- 18: vertikaler Teil
- 20: Mündung
- 22: Bodenbereich des Belebungsbeckens
- 24: Überlaufleitung
- 26: Sedimentations- und Umwälzbecken
- 28: horizontaler Abschnitt
- 30: Knie
- 32: vertikaler Abschnitt
- 34: Mündung
- 36: tiefsten Schlammspiegels
- 38: tiefster Wasserstand
- 40: Zulauföffnung der Überlaufleitung
- 42: Rückfördereinrichtung für Belebtschlamm
- 44: Bodenbereich des Sedimentations und Umwälzbeckens
- 46: horizontaler Strang
- 48: Ansaugöffnungen
- 50: Rohrleitung der Rückfördereinrichtung
- 52: vertikaler Strang
- 54: zweiter horizontaler Strang
- 56: geneigter Strang
- 58: Mündung der Rückfördereinrichtung
- 60: Wand des Belebungsbeckens
- 62: vertikaler Abstand
- 64: Luftzuführung
- 66: Abzugseinrichtung für geklärtes Wasser
- 68: oberer U-förmiger Krümmer
- 70: unterer U-förmiger Krümmer
- 72: Luftzuführung
- 74: Sperrgaszuführung
- 76: Verbindungsleitung
- 78: horizontale Ablaufleitung der Abzugseinrichtung
- 80: Schwimmer
- 82: Überschußschlamm-Abzugseinrichtung
- 84: vertikalen Rohrstrang
- 86: Ansaugöffnung
- 88: Luftzuführung
- 90: horizontaler Rohrstrang
- 92: abwärts gerichteter Rohrstrang
- 94: Mündung
- 96: Belüftungseinrichtung
- 98: Belüftungseinrichtung

## Patentansprüche

1. Verfahren zur biologischen Reinigung von Abwasser mit Hilfe von Belebtschlamm, bei dem das Abwasser zunächst in ein belüftbares Belebungsbecken und anschließend in ein Sedimentationsbecken eingeleitet wird, in dem eine Trennung von Belebtschlamm und Klarwasser erfolgt und nach Trennung Belebtschlamm in das Belebungsbecken zurückgeführt und Klarwassser abgezogen wird, und wobei im Sedimentationsbecken mehrmals am Tag ein Betriebszyklus abläuft, der eine Rührphase, eine Vorabsetzphase und eine Abzugsphase aufweist, wobei in der Rührphase der Belebtschlamm wieder mit dem Wasser vermischt wird, in der Vorabsetzphase der Belebtschlamm sedimentiert wird und in der Abzugsphase Klarwasser abgezogen wird, dadurch gekennzeichnet, daß nach der Vorabsetzphase und vor der Rührphase sedimentierter Belebtschlamm in das Belebungsbecken rückgeführt wird.

2. Verfahren nach Anspruch 1, dadurch gekennzeichnet, daß die Rückförderung von sedimentiertem Belebtschlamm während oder vorzugsweise nach dem Abzug des geklärten Wassers erfolgt.

3. Verfahren nach Anspruch 1 oder 2, dadurch gekennzeichnet, daß während der Rührphase dem Sedimentationsbekken sauerstoffhaltiges Gas zugeführt wird.

4. Verfahren nach einem der Ansprüche 1 bis 3, dadurch gekennzeichnet, daß die Zuführung des sauerstoffhaltigen Gases in das Belebungsbecken bei Beginn der Rückförderung des sedimentierten Belebtschlammes aus dem Sedimentationsbecken unterbrochen wird.

5. Verfahren nach einem der Ansprüche 1 bis 3, dadurch gekennzeichnet, daß die Zuführung des sauerstoffhaltigen Gases in das Belebungsbecken bei Beginn der Rückförderung des sedimentierten Belebtschlammes aus dem Sedimentationsbecken gedrosselt wird.

6. Verfahren nach Anspruche 4 oder 5, dadurch gekennzeichnet, daß die Zuführung des sauerstoffhaltigen Gases während der gesamten Zeit der Rückförderung des sedimentierten Belebtschlammes unterbrochen oder gedrosselt ist.

7. Verfahren nach einem der Ansprüche 4 bis 6 , dadurch gekennzeichnet, daß die Zuführung des sauerstoffhaltigen Gases mit zeitlichem Abstand vor Beginn der Rückförderung des sedimentierten Belebtschlammes unterbrochen oder gedrosselt wird.

8. Verfahren nach Anspruch 7, dadurch gekennzeichnet, daß der zeitliche Abstand weniger als 10 %, vorzugsweise weniger als 5 % der Zykluszeit der Verfahrensschritte im Sedimentationsbecken beträgt.

9. Verfahren nach einem der Ansprüche 1 bis 8, dadurch gekennzeichnet, daß die Dauer der Rückförderung des sedimentierten Belebtschlammes weniger als 10 %, vorzugsweise weniger als 5 % der Zykluszeit der Verfahrensschritte im Sedimantationsbecken beträgt.

10. Verfahren nach einem der Ansprüche 1 bis 9, dadurch gekennzeichnet, daß das aus dem Belebungsbecken verdrängte Wasser im Sedimentationsbecken unter der Höhe des Schlammspiegels eingeleitet wird.

11. Verfahren nach einem der Ansprüche 1 bis 10, dadurch gekennzeichnet, daß während der Zuführung des sauerstoffhaltigen Gases im Sedimentationsbecken gleichzeitig auch dem Belebungsbecken sauerstoffhaltiges Gas zugeführt wird.

12. Verfahren nach einem der Ansprüche 1 bis 10, dadurch gekennzeichnet, daß die Zuführung des sauerstoffhaltigen Gases im Sedimentatinsbecken alternierend mit der Zuführung von sauerstoffhaltigem Gas im Belebungsbekken erfolgt.

13. Verfahren nach einem der Ansprüche 1 bis 12, dadurch gekennzeichnet, daß mindestens zwei Paare von Belebungsbecken und Sedimentationsbecken parallel geschaltet sind und zeitversetzt betrieben werden.

14. Verfahren nach einem der Ansprüche 1 bis 13, dadurch gekennzeichnet, daß die Abzugszeit des geklärten Wassers gemessen und über einen Algorithmus die Zufuhr des sauerstoffhaltigen Gases im nächsten Zyklus beeinflußt wird.

15. Verfahren nach einem der Ansprüche 1 bis 14, dadurch gekennzeichnet, daß in zulaufschwachen Zeiten aus einer gegebenenfalls vorhandenen anaeroben Vorbehandlung des Abwassers Schlamm in das Belebungsbecken zugespeist wird.

16. Vorrichtung zur Durchführung des Verfahrens nach einem der Ansprüche 1 bis 15 mit wenigstens einem Belebungsbecken (10) und wenigstens einem Sedimentationsbecken (26), wobei das Belebungsbecken (10) einen Zufluß für Abwasser (8), eine Zuführungseinrichtung (96) für sauerstoffhaltiges Gas und einen Überlauf (24) zum Sedimentationsbecken (26) aufweist, und mit einer Abzugseinrichung (66) für geklärtes Wasser und einer Abzugseinrichtung (82) für Überschußschlamm, dadurch gekennzeichnet, daß im Sedimentationsbecken (26) eine Rückfördereinrichtung (42) für sedimentierten Belebtschlamm vorgesehen ist, wobei die Rückfördereinrichtung (42) wenigstens eine Ansaugöffnung (48) im unteren Teil des Sedimentationsbeckens (26) aufweist.

17. Vorrichtung nach Anspruch 16, dadurch gekennzeichnet, daß wenigstens eine Ansaugöffnung (48) der Rückfördereinrichtung (42) im Bodenbereich (44) des Sedimentationsbeckens (26) angeordnet ist.

18. Vorrichtung nach Anspruch 16 oder 17, dadurch gekennzeichnet, daß mehrere Ansaugöffnungen (48) der Rückfördereinrichtung (42) mit horizontalem Abstand zueinander vorgesehen sind.

19. Vorrichtung nach einem der Ansprüche 16 bis 18, dadurch gekennzeichnet, daß die Ausmündung (58) der Rückfördereinrichtung (42) im Belebungsbeck (10) mit horizontalem Abstand zum Überlauf angeordnet ist.

20. Vorrichtung nach Anspruch 19, dadurch gekennzeichnet, daß die Ausmündung (58) der Rückfördereinrichtung (42) in der Nähe der dem Überlauf gegenüberliegenden Wand des Belebungsbeckens (10) angeordnet ist.

21. Vorrichtung nach einem der Ansprüche 18 bis 20, dadurch gekennzeichnet, daß die Ausmündung (58) der Rückfördereinrichtung (42) unter dem niedrigsten Wasserstand (38) angeordnet ist.

22. Vorrichtung nach Anspruch 21, dadurch gekennzeichnet, daß der vertikale Abstand der Ausmündung (58) der Rückfördereinrichtung (42) zum niedrigsten Wasserstand (38) 10 bis 90 %, vorzugsweise etwa 20 bis 40 % der Höhe des niedrigsten Wasserstandes beträgt.

23. Vorrichtung nach einem der Ansprüche 16 bis 22, dadurch gekennzeichnet, daß die Rohrleitung (50) der Rückfördereinrichtung (42) auf ihrer ganzen Länge unter dem tiefsten Wasserstand (38) angeordnet ist.

24. Vorrichtung nach Anspruch 23, dadurch gekennzeichnet, daß zumindestens Teilbereiche der Rohrleitung (50) der Rückfördereinrichtung (42) innerhalb der Überlaufleitung (24) zwischen dem Belebungsbecken (10) und dem Sedimentationsbecken (26) angeordnet sind.

25. Vorrichtung nach einem der Ansprüche 16 bis 25, dadurch gekennzeichnet, daß die Zulauföffnung (40) der Überlaufleitung (24) im Bereich des niedrigsten Wasserstandes (38) angeordnet ist.

26. Vorrichtung nach einem der Ansprüche 16 bis 25, dadurch gekennzeichnet, daß die Überlaufleitung (40) zwischen dem Belebungsbecken (10) und dem Sedimentationsbecken (26) einen horizontalen Abschnitt (28) aufweist.

27. Vorrichtung nach Anspruch 26, dadurch gekennzeichnet, daß die Überlaufleitung (40) im Sedimentationsbecken (26) ein Knie (30) und einen vertikalen Abschnitt (32) aufweist.

28. Vorrichtung nach Anspruch 27, dadurch gekennzeichnet, daß die Mündung (34) der Überlaufleitung (24) im Sedimentationsbecken (26) unterhalb des Schlammspiegels (36) des sedimentierten Belebtschlammes angeordnet ist.

29. Vorrichtung nach einem der Ansprüche 16 bis 28, dadurch gekennzeichnet, daß die Mündung (20) der Zuleitung in das Belebungsbecken (10) im Bodenbereich (22) des Belebungsbeckens (10) angeordnet ist.

30. Vorrichtung nach einem der Ansprüche 16 bis 29, dadurch gekennzeichnet, daß die Rückfördereinrichtung (42) als Druckluftheber ausgebildet ist.

31. Vorrichtung nach einem der Ansprüche 16 bis 30, daß die Abzugseinrichtungen für geklärtes Wasser (66) und für Überschußschlamm (82) ebenfalls als Druckluftheber ausgebildet sind.

32. Vorrichtung nach Anspruch 31, dadurch gekennzeichnet, daß die Abzugseinrichtung für geklärtes Wasser (66) einen oberen (68) und einen unteren (70) U-förmigen Krümmer aufweist.

33. Vorrichtung nach Anspruch 32, dadurch gekennzeichnet, daß im Bereich des oberen U-förmigen Krümmers (68) der Abzugseinrichtung (66) für geklärtes Wasser eine Luftzuführung angeordnet ist, die mit der Zuleitung zur Zuführeinrichtung für sauerstoffhaltiges Gas im Sedimentationsbecken (26) unter Zwischenschaltung einer Drosseleinrichtung verbunden ist.

34. Vorrichtung nach einem der Ansprüche 16 bis 33, dadurch gekennzeichnet, daß die Abzugseinrichtungen (66; 88) für geklärtes Wasser und für Überschußschlamm über ein gemeinsames Steuerventil mit Fördergas versorgt werden, und daß Drosseleinrichtungen nach dem Steuerventil vorgesehen sind, mit denen die Fördermenge der beiden Abzugseinrichtungen unabhängig voneinander geregelt werden kann.

35. Vorrichtung nach einem der Ansprüche 16 bis 34, dadurch gekennzeichnet, daß im Sedimentationsbecken (26) ein Schwimmer (80) für die Regelung des niedrigsten Wasserstandes (38) vorgesehen ist, der bei Erreichen des niedrigsten Wasserstandes das Steuerventil schließt.
